# EUROPEAN PATENT SPECIFICATION

(11) **EP 2 234 760 B1**
(45) Date of publication and mention of the grant of the patent: **05.06.2013**
(21) Application number: 08860364.2
(22) Date of filing: 05.12.2008
(51) Int. Cl.: B24D 3/02, B24D 5/12, B24D 18/00

(54) **MULTIFUNCTION ABRASIVE TOOL WITH HYBRID BOND**
MEHRFUNKTIONSSCHLEIFWERKZEUG MIT HYBRIDVERBINDUNG
OUTIL ABRASIF MULTIFONCTION AVEC LIANT HYBRIDE

(30) Priority: 12.12.2007 US 7417 P
(43) Date of publication of application: 06.10.2010
(73) Proprietor: Saint-Gobain Abrasives, Inc., Worcester, MA 01615 (US); SAINT-GOBAIN ABRASIFS, 78700 Conflans Sainte Honorine (FR)
(72) Inventor: UPADHYAY, Rachana, D., Shrewsbury MA 01545 (US); RAMANATH, Srinivasan, Holden MA 01520 (US); CORCORAN, Robert, F., Jr., Holden MA 01520 (US); PUTHANANGADY, Thomas, K., Shrewsbury MA 01545 (US); HALL, Richard, W. J., Southborough MA 01772 (US); HARLEY, Lynn, L., 93004 Ventura,CA (US)
(74) Representative: Leidescher, Thomas
(86) International application number: PCT/US2008/013393
(87) International publication number: WO 2009/075775

(56) References cited:
- WO-A-97/29886
- US-A- 5 313 742

## Description

### FIELD OF THE DISCLOSURE

The disclosure relates to abrasives technology, and more particularly, to abrasive tools suitable, e.g., for simultaneously performing multiple functions, such as dicing and polishing of hard brittle materials.

### BACKGROUND

Resin-metal or so-called "hybrid" bonds are generally known in the superabrasives industry. The first resin bonds for diamond tools were based on phenolic systems. It was soon found that the resin itself was not optimum, on its own, for some applications. Thus, tool makers introduced secondary fillers to modify the properties of the resin and enable the performance of tools in various applications to be improved. In particular, silicon carbide powder was introduced where a more brittle, friable bond was needed, and copper powder was introduced when a stronger, tougher bond was required (e.g., copper metal bond tools were used in antiquity with natural diamond powder for cutting gemstones). These fillers are still used in many conventional phenolic resin bond systems.

During the 1970's it was thought that, in some applications, the properties of hybrid resin-metal bonds might enhance performance. In more detail, if the diamond could be distributed in a continuous metal phase (for wear resistance and long life), and if a continuous resin phase could be incorporated into the microstructure (for lower wear resistance and free-cutting properties), then the benefits of both systems might be available. This technique was first successfully employed in the Resimet® bonding system, in which the primary component is a cold-pressed and sintered metal porous structure that firmly secures diamond or CBN grains. The secondary bond component is a vacuum cast resin which completely impregnates the porosity in the metal bond structure. The result is a microstructure with two interpenetrating continuous metal (bronze) and resin (epoxy) phases. Great Britain Patent No. 1,279,413 describes details of such bonding systems. Typical applications for this type of hybrid bond are in grinding of carbide cutting tools, particularly when good corner-holding ability is required, and typical grit sizes are in the mesh range FEPA D46 and coarser (i.e., 325 Mesh and coarser, or 44 microns and coarser).

Phenolic resin has good thermal resistance, but polyimide is even better, so when these types of resins were introduced in the late 1970's by DuPont, one of the first applications was in diamond tools. U.S. Patent Nos. 4,001,981 and 4,107,125 describe polyimide bonded superabrasive tools. As in phenolic resin tools, various fillers are used to modify the properties of the bonds, and copper and bronze powders are used as well. Such polyimide based bonds are typically used in situations where a lot of heat is generated (i.e., where the bond must be resistant to high temperatures). The primary example application is in fluting of round, cemented carbide tools, such as drills and end-mills.

More exacting applications calling for greater precision and cut quality have historically used different tool configurations and bond types. For example, and as is known, a hard disk drive (HDD) is a commonly used storage mechanism used in numerous consumer electronic applications, including computers and game consoles, mobile phones and personal digital assistants, digital cameras and video recorders, and digital media players (e.g., MP3 players). HDD designs generally include a circular magnetic 'platter' (onto which data are recorded) that spins about a spindle. As the platter spins, a read-write head is used to detect and/or modify the magnetization of the platter storage location directly under it. The read-write head itself is attached to a 'slider,' which is an aerodynamically shaped block that allows the read-write head to maintain a consistent 'flying height' above the platter. The slider is connected to an actuator assembly (e.g., motor and arm) that operates to move the read-write head to any storage location on the platter. Manufacturing of the slider component presents a number of challenges. For instance, as the form factor of the electronic devices that employ HDDs decreases, so does the size of the components that make up the HDD, including the slider (which can be about 1/50^{th} to 1/100^{th} the size of a penny). As such, the slider must be cut to fairly precise dimensions. Exacerbating this manufacturing complexity is the fact that sliders are typically made from hard brittle materials (e.g., Al₂O₃-TiC, see for example U.S. Patent No. 4,430,440), which are difficult to cut without incurring problems such as chipping and excessive kerf. US 5,313,742 A describes a cutting wheel that has a high degree of stiffness and is suitable for dicing silicon wafers. In addition, US 5,313,742 describes that the cutting wheel has an inner section that is thicker than an outer section, e.g., wherein the inner section has a thickness of 250 microns and the outer section has a thickness of 140 microns. The wheel includes abrasive grits held by a bond. The bond can be ahybrid bond, including a polymer or resin such as polyimide, and a metal bonding material such as Cu-Zn-Ag, Co-WC, Cu-Ni-Zn, Cu-Ni-Sb, Ni-Cu-Mn-Si-Fe, Ni-Cu-Sb-TaC. WO 97/29886 A is directed to grinding tools to machine brittle materials, such as natural and artificial stone, sintered tungsten carbide, steel, ceramics, and similar materials. The grinding tools of WO 97/29886 A can include a resinoid bonding material having bronze and a polyimide.

There remains a continuing need, therefore, for new abrasive tools that can cut hard, brittle materials to precise dimensions.

### SUMMARY

One embodiment of the present disclosure provides an abrasive tool as defined in claim 1. The tool includes a hybrid bond of a metal alloy, and a resin associated with a Heat Deflection temperature (e.g., as measured by ASTM standard D648) or other comparable processing temperature parameter (where the resin softens without melting, generally referred to as a "softening temperature") less than 500°C (e.g., in the range of about 100°C to 450°C, or even more specifically, in the range of about 160°C to 400°C). The metal alloy (e.g., bronze) has a liquid phase or transient liquid phase at the Heat Deflection or softening temperature of the resin, and a fracture toughness between 1 and 5 MPa.m^{0.5} at room temperature. The metal alloy does not include cobalt. The resin (e.g., polyimide) can have a ductility in the range of about 3% to 25%. The tool further includes a plurality of fine abrasive grits blended with the hybrid bond. The tool is a thin abrasive wheel which can have a substantially straight and has a substantially uniform thickness of 250 microns or less. In one particular case, the tool is a multifunction tool capable of both slicing and polishing hard brittle materials in a single pass. Various other abrasive tool parameters as discussed herein can be equally applied to such alternative embodiments.

Another embodiment of the present disclosure provides a method for making thin abrasive wheels as defined in claim 13. The method includes providing pre-selected proportions of particulate ingredients including abrasive grains, a resin having a softening temperature such as a polyimide, and a metal alloy having a liquid phase or transient liquid phase at the softening temperature of the resin and a fracture toughness between 1 and 5 MPa.m^{0.5} at room temperature, e.g., a pre-alloyed bronze (e.g., about 50 by weight % of copper and about 50 weight % of tin). The method continues with mixing the particulate ingredients to form a substantially uniform composition, placing the substantially uniform composition into a mold of desired shape, and compressing the mold to a pressure in the range of about 25-200 MPa for a duration effective to form a molded article (e.g., 5 to 30 minutes). The method continues with heating the molded article to a temperature less than 500°C (e.g., in the range of about 100°C to 450°C, or even more specifically, in the range of about 160°C to 400°C) for a duration effective to sinter the metal alloy and soften the resin , thereby integrating the abrasive grains and sintered bond into a composite of substantially continuous metal alloy phase, with a substantially continuous or substantially discontinuous resin phase, and then cooling the composite to form the abrasive wheel. The method continues with lapping sides of the abrasive wheel to provide a desired degree of straightness and a substantially uniform thickness of 250 microns or less (e.g., double-sided lapping, where opposing sides of the tool are simultaneously lapped to provide the substantially uniform thickness of about 250 microns or less). In an alternative embodiment, the method includes forming multiple thinner tools from the initial abrasive tool, where each thinner tool has a substantially uniform thickness of 250 microns or less, thereby providing a multi-blade abrasive tool (ganged-like configuration). In one such case, forming multiple thinner tools from the initial abrasive tool is accomplished using electro-discharge machining (EDM).

The features and advantages described herein are not all-inclusive and, in particular, many additional features and advantages will be apparent to one of ordinary skill in the art in view of the drawings, specification, and claims.

### DETAILED DESCRIPTION OF PRESENTLY PREFERRED EMBODIMENTS

Abrasive tools and techniques are disclosed that can cut hard, brittle materials to relatively precise dimensions. The tools, which include a hybrid bond of metal alloy (e.g., bronze) and a resin (e.g., polyimide) matrix together with fine abrasive grits, can be employed, for example, in mirror finish cutting applications, thereby enabling '1X' or 'single-pass' multi-function abrasive processes. Numerous tool types and applications will be apparent in light of this disclosure, including abrasive products for electronic device manufacturing such as thin 1A8 blades (single blade or multi-blade configuration) and other such cutting blades.

In one exemplary application, the disclosed tools can be used in the mirror finish dicing of read-write head sliders. Typically, read-write head sliders made of hard, brittle materials such as alumina titanium carbide (Al₂O₃-TiC) are manufactured in a two-step process involving a dicing step that uses a metal-bonded tool and a subsequent discrete polishing step that uses a resin-bonded tool. A tool configured in accordance with an embodiment of the present disclosure is capable of performing both slicing and polishing in a single pass (also referred to as a "1X process" herein). As will be appreciated in light of this disclosure, note that such embodiments may also be used in multiple-pass or "2X" processes, if so desired.

In more detail, the blade of this example embodiment includes a metal alloy, such as bronze, and a resin, such as polyimide resin, with fine diamond abrasive grit for dicing/polishing of hard and brittle material such as alumina-titanium carbide. The metal alloy can be substantially continuous or discrete in nature, although substantially continuous can have certain performance benefits associated with kerf quality and tool wear, and can be sintered in solid or liquid phase at process temperatures of the polyimide. In addition, the metal alloy can transfer the stiffness to the tool (i.e., no interfacial sliding between metal alloy and polyimide), and its hardness can be less than that of the work material. A suitable polyimide (or other comparable resin) generally has low elongation % and high thermal stability. As will further be appreciated in light of this disclosure, the present disclosure is not intended to be limited to bronze and polyimide. Rather, the bronze can be replaced, for example, by any metal alloy that has a liquid phase or transient liquid phase at the softening temperature (e.g., Heat Deflection temperature as measured, for instance, by ASTM standard D648) of the resin and a fracture toughness between 1 and 5 MPa.m^{0.5} at room temperature. Alternatively, the polyimide can be replaced, for example, by any resin or polymer that has a softening temperature less than 500°C (e.g., in the range of about 160°C to 400°C) and a ductility in the range of about 3% to 25%. In general, the specific selection of resin and metal alloy types is such that the tool is sufficiently brittle for the purpose of manufacture and durability, but ductile enough to withstand the grinding and handling stresses (i.e., overly stiff tools are susceptible to breakage).

The content of resin may range, for example, from about 1 to 50 volume percent (vol %), while the content of metal alloy may range, for example, from about 40 to 85 vol %. The metal alloy can be bronze with, for example, 60/40 to 40/60 copper/tin by weight (e.g., 50/50 by weight %). The diamond content (or other suitable abrasive grain) may range, for example, from 10 to 30 vol %, at a concentration ranging from about 40 to 100 concentration. The diamond grit particles may have an average diameter, for instance, of not more than 40 microns in diameter, preferably in the range of 1 micron to 12 microns, and more preferably in the range of 1 micron to 3 microns. The bronze powder and polyimide particles may have an average diameter, for instance, of not more than 40 microns and more preferably 30 microns or less. The actual composition will vary depending on factors such as desired straightness and rigidity/ductility, as well as self-dressing capability and allowable degree of chipping along the kerf (if any). Such tools perform well in 1X slicing/polishing processes for hard brittle workpieces, such as in manufacturing of microelectronic wafer components (e.g., silicon wafers and Al₂O₃-TiC sliders).

The abrasive is not intended to be limited to diamond, and can be essentially any suitable abrasive such as CBN, fused alumina, sintered alumina, silicon carbide, or mixtures thereof. The selection of abrasive depends on factors such as the material being cut and desired tool cost. As is known, the abrasive grains may be provided with a coating which will vary in its nature, depending on the specific abrasive used. For instance, if the abrasive is diamond or CBN then a metal coating on the abrasive (e.g. nickel) can be used to improve grinding properties. Similarly, fused alumina's grinding quality is enhanced, in certain grinding or cutting applications, if the grain is coated with iron oxide or a silane such as gamma amino propyl triethoxy silane. Likewise, sintered sol gel and seeded sol gel alumina abrasive exhibit enhanced grinding properties when they have been supplied with a silica coating, or in some cases, improvement may result if the sintered abrasive is silane treated. The operable abrasive grit size can also vary depending on the desired performance, and in accordance with some embodiments of the present disclosure, the grit size is 40 microns or finer.

In various alternative embodiments, tools of the present application can have a thickness of 250 microns or less, preferably 100 microns or less, more preferably 70 microns or less, and even more preferably 65 microns or less. Although the tool type and its dimensions can vary as well (depending on the target application), one such example tool is a type 1A8 wheel, having a thickness of about 30 to 130 microns (e.g., 65 microns or less), an outside diameter of about 50 to 150 millimeters (e.g., 110 mm), and inside diameter of about 35 to 135 mm (e.g., 90 mm). The abrasive section of the multi-function blade generally extends from the outside diameter to the inside diameter of the wheel, although partial abrasive sections that extend from the outside diameter to some distance from the inner diameter can be used as well, when suitable.

The tool can be manufactured, for example, from a powder blend at around 300 to 420°C. In one such embodiment, the selection of the metal alloy is such that at least one of the phases present in the alloy melts at such a temperature, resulting in improved sinterability of the tool, better diamond retention, enhanced tool stiffness, and a path for extraction of the heat generated in slicing/polishing process. Polyimide generally does not possess a melting point at the process temperatures, but only softens. High pressures can be used to ensure that the densification is complete during the formation process (e.g., molding).

One commercially available abrasive tool consists of cobalt metal, resin, and fine diamond grits. However, the use of cobalt can pose a number of issues. Specifically, a cobalt-based product is typically very brittle and tends to break in handling and use. In addition, use of cobalt leads to a structure that is under-sintered and possesses poor grit retention (this is because cobalt doesn't flow very well at process temperatures associated with suitable resins). Depending on context, cobalt can be environmentally unfriendly. Furthermore, the high stiffness of cobalt may not be transferred to the tool due to sliding at the cobalt-resin interface. Other factors, such as the choice of resin type and fillers used, and process temperature also play a role in tool performance (e.g., beneficial qualities of resin deteriorate when subjected to excessive temperature).

Another subtle but significant issue associated with using cobalt is related to magnetic properties. In particular, cobalt is known as a hard ferro-magnetic material which will readily magnetize. To this end, it is believed that the cobalt in a cobalt-based blade may upset the magnetic properties of the sliced and polished workpiece (e.g., Al₂O₃-TiC sliders). This could be due either to residual cobalt contamination picked up on the surface of the workpiece during cutting (e.g., as the tool wears, cobalt is released from the tool and some of it sticks to or is embedded in the workpiece), or to the effect of cobalt in the tool influencing the local magnetic field around the grinding zone, which subsequently interacts with the workpiece.

In contrast to such conventional cobalt-based products, a tool configured in accordance with an embodiment of the present disclosure has shown superior ability to withstand handling and high grinding forces by maintaining a suitable degree of ductility, and can be used to grind at higher depths of cut. In addition, the exemplary metal alloy does not include any cobalt, and sufficiently flows at process temperatures associated with polyimide to provide excellent sinterability, grit retention, stiffness, and ductility. Moreover, a metal alloy of bronze is non-magnetic and thus does not influence the local magnetic field around the grinding zone, or contaminate the workpiece surface with magnetic particles. U.S. Patent Nos. 5,313,742, 6,200,208, and 6,485,532 provide additional details relevant to conventional abrasive tools capable of cutting hard brittle materials.

Thus, abrasive tools configured in accordance with such embodiments can be used in simultaneous 1X dicing and polishing operations performed in the manufacture of Al₂O₃-TiC sliders and other such components made from hard brittle materials. In a more general sense, abrasive tools configured in accordance with such embodiments can be used to perform 1X processes involving the combination of cutting and polishing to a fine finish workpieces that are traditionally sliced or otherwise cut with one tool and polished with another. Such tools may be used in non-1X applications (e.g., 2X) as well, if so desired. The disclosed tools provide improved tool life, better edge quality (good perpendicularity and no or low degree of chipping), and better finish relative to conventional tools (no or fewer scratches). In addition, the tools effectively reduce manufacturing costs associated with time, labor, and power, by enabling a two-in-one process.

### Example Tool Configuration #1

In one specific abrasive tool configuration according to an embodiment of the present disclosure, the tool is a type 1A8 wheel, having a thickness of about 65 microns, an outside diameter of about 110 millimeters, and an inside diameter of about 90 mm, and the blade composition is as follows: 31.25 volume percent Vespel® SP1 polyimide (with the powder particles having an average diameter of about 30 microns), 50 vol % bronze (50/50 by weight of copper and tin, with the powder particles having an average diameter of about 30 microns), and 18.75 vol % of diamond (at 75 concentration, and having an average diameter of 1 to 3 microns). The diamonds can be, for instance, 1 to 3µm (-8µm) RB Amplex® diamond, or 1 to 2µm (-8) RVM CSG Diamond Innovations® diamond. Other suitable diamond types and sources will be apparent in light of this disclosure. The tolerances on the tool dimensions and composition may be, for example, +/-10 percent, although looser tolerances (e.g., +/-20 percent or more) or tighter tolerances (e.g., +/-5 percent or less) can be used as well, depending of the particular application and desired precision and performance.

The thinness of the tool reduces wasted work material, yet has a straightness that allows for precision slicing and edge quality (low kerf loss with substantially perpendicular kerf wall, such as within 15 degrees of the perpendicular plane or better). Straightness refers to the axial thickness of the wheel being substantially uniform at all radii from the radius of the arbor hole to the outer radius of the wheel. In one embodiment, this thin, straight tool thickness is achieved by double-sided lapping the tool down to 65 microns. Single-sided lapping may be used as well, but care must be given so as to not distort the tool (e.g., using cooling techniques and allocating additional manufacturing time).

In this particular example embodiment, the tool includes a substantially continuous metal alloy phase (pre-alloyed bronze), with either a substantially continuous or substantially discontinuous polyimide phase. This 1A8 tool design can be used, for example, in 1X applications where simultaneous slicing and polishing is desired. The substantially continuous metal alloy phase of bronze improves the stiffness of the tool (high aspect ratio of exposed tool, so stiffness is helpful in controlling kerf), and the polyimide adds a degree of compliance to the tool structure so that, during cutting, the diamond on the tool sides are pressed back slightly into the bond, thereby limiting the depth of cut which they take, and thus improving edge finish on the workpiece.

When compared to a cobalt-based polyimide tool of similar configuration, this example multifunction tool performed comparably with respect to edge straightness and chip thickness proximate the edge. However, the tool configured in accordance with this embodiment was relatively harder than the cobalt-based tool, and exhibited both lower tool wear and smaller kerf relative to the cobalt-based tool. In addition, AFM (atomic force microscope) analysis showed that this tool provided a better workpiece edge finish Ra of 27 Å, compared to the workpiece edge finish Ra of 43 Å provided by the cobalt-based tool.

Table 1 summarizes performance parameters of this comparative analysis between the Example 1 embodiment and the cobalt-based tool. These data are based on the first row or pass of the tool through the workpiece. For additional passes (rows), the difference in wear rate became further pronounced. For instance, after 15 rows (24 slots), the tool wear was about 36 microns for the cobalt-based tool and about 28 microns for the Example 1 embodiment. The comparative testing was done at a table speed of about 100 mm/min and tool speed of 9000 RPMs.

**Table 1: Comparative Performance Data**

| **Parameter** | **Cobalt-based Tool** | **Embodiment #1** |
|---|---|---|
| Tool Wear µm | 4 | 0 |
| Straightness µm | 2 | 2 |
| Kerf µm | 74 | 67 |
| Chips µm | 1 | 1 |
| Surface Finish Ra, Å | 43 | 27 |

In addition, it is noted that increasing tool speed of the Example 1 embodiment from 9000 RPMs to, for instance, 11000 to 18000 RPMs (depending on upper limit of machine) improved edge straightness and reduced need for tool dressing. On the other hand, lower tool speeds can be used, if performing intermediate tool dressing operations (e.g., in between each row or sub-set of rows) is acceptable.

With respect to particle sizes, there is generally no specific requirement. Commercially available sizes of the various tool components have been used as described herein, with acceptable results (as also described herein). However, it is generally believed that finer particle sizes of bronze may operate to improve diamond distribution and tool performance. Thus, in some embodiments described herein, bronze particles in the range of 10 microns or less are used (e.g., to improve distribution of the 1 to 3 micron diamond). However, and as will be appreciated in light of this disclosure, larger bronze particles (e.g., in the 30 micron range) are effective as well.

### Example Tool Configuration #2

In another specific abrasive tool configuration according to an embodiment of the present disclosure, the tool is a type 1A8 wheel, having dimensions as previously described, and a blade composition as follows: 21.25 volume percent Vespel® SP1 polyimide (with the powder particles having an average diameter of about 30 microns), 60 vol % bronze (50/50 by weight of copper and tin, with the powder particles having an average diameter of about 30 microns), and 18.75 vol % of diamond (at 75 concentration, and having an average diameter of 1 to 2 microns). Previous discussion with respect to tolerances is equally applicable here.

This example multifunction tool provided a workpiece surface finish Ra of 42 Å, with other performance parameters remaining comparable to the Example 1 embodiment.

### Example Tool Configuration #3

In another specific abrasive tool configuration according to an embodiment of the present disclosure, the tool is a type 1A8 wheel, having dimensions as previously described, and a blade composition as follows: 11.25 volume percent Vespel® SP1 polyimide (with the powder particles having an average diameter of about 30 microns), 70 vol % bronze (50/50 by weight of copper and tin, with the powder particles having an average diameter of about 5 to 8 microns), and 18.75 vol % of diamond (at 75 concentration, and having an average diameter of 1 to 3 microns). Previous discussion with respect to tolerances is equally applicable here.

This example multifunction tool provided a workpiece surface finish Ra of 48 Å, with other performance parameters remaining comparable to the Example 1 embodiment. However, this tool provided improved straightness, better entry and exit geometry (scratch-free entry and exit of cut) relative to Example 1 embodiment, and reduced dressing operations between rows.

### Example Tool Configuration #4

In another specific abrasive tool configuration according to an embodiment of the present disclosure, the tool is a type 1A8 wheel, having dimensions as previously described, and a blade composition as follows: 30.25 volume percent Vespel® SP1 polyimide (with the powder particles having an average diameter of about 30 microns), 57.25 vol % bronze (50/50 by weight of copper and tin, with the powder particles having an average diameter of 5 to 8 microns), and 12.5 vol % of diamond (at 50 concentration, and having an average diameter of 1 to 2 microns). Previous discussion with respect to tolerances is equally applicable here.

This example multifunction tool exhibited performance parameters comparable to Example 1 embodiment.

### Example Tool Configuration #5

In another specific abrasive tool configuration according to an embodiment of the present disclosure, the tool is a type 1 A8 wheel, having dimensions as previously described, and a blade composition as follows: 20.25 volume percent Vespel® SP1 polyimide (with the powder particles having an average diameter of about 30 microns), 67.25 vol % bronze (50/50 by weight of copper and tin, with the powder particles having an average diameter of 5 to 8 microns), and 12.5 vol % of diamond (at 50 concentration, and having an average diameter of 1 to 2 microns). Previous discussion with respect to tolerances is equally applicable here.

This example multifunction tool exhibited performance parameters comparable to Example 3 embodiment

In addition to the performance testing previously described, wear test data were measured for a number of samples having varying amounts of abrasives content, as well as bronze-polyimide ratio, to determine the effect of such variations on tool wear. While there was no significant change in tool wear attributed to varying diamond concentration (e.g., from 60 to 75 concentration), a significant change in tool wear can be achieved by increasing the bronze content (e.g., from 65 vol % to 70 vol % or 75 vol % corresponded to decrease in tool wear).

### Example Tool Configuration #6

In another specific abrasive tool configuration according to an embodiment of the present disclosure, the tool is a type 1A8 wheel, having a thickness of about 65 microns, an outside diameter of about 110 millimeters, and an inside diameter of about 90 mm, and the blade composition is as follows: 26.5 volume percent Meldin 7001® polyimide (with the powder particles having an average diameter of about 10 microns), 54.8 vol % bronze (50/50 by weight of copper and tin, with the powder particles having an average diameter of about 8 microns), and 18.7 vol % of diamond (at 75 concentration, and having an average diameter of 1 to 2 microns). The diamonds can be, for instance, 1 to 2µm (-8µm) 1 to 2µm (-8) RVM CSG Diamond Innovations® diamond. The tolerances on the tool dimensions and composition may be, for example, +/-10 percent, although looser tolerances (e.g., +/-20 percent or more) or tighter tolerances (e.g., +/-5 percent or less) can be used as well, depending of the particular application and desired precision and performance. The tools are manufactured in a manner similar to the tools in Example 1.

The thinness of the tool reduces wasted work material, yet has a straightness that allows for precision slicing and edge quality (low kerf loss with substantially perpendicular kerf wall, such as within 15 degrees of the perpendicular plane or better). Straightness refers to the axial thickness of the wheel being substantially uniform at all radii from the radius of the arbor hole to the outer radius of the wheel. In one embodiment, this thin, straight tool thickness is achieved by double-sided lapping the tool down to 65 microns. Single-sided lapping may be used as well, but care must be given so as to not distort the tool (e.g., using special cooling techniques and allocating additional manufacturing time).

In this particular example embodiment, the tool includes a substantially continuous metal alloy phase (pre-alloyed bronze), with either a substantially continuous or substantially discontinuous polyimide phase. This 1A8 tool design can be used, for example, in 1X applications where simultaneous slicing and polishing is desired. The substantially continuous metal alloy phase of bronze improves the stiffness of the tool (high aspect ratio of exposed tool, so stiffness is helpful in controlling kerf), and the polyimide adds a degree of compliance to the tool structure so that, during cutting, the diamond on the tool sides are pressed back slightly into the bond, thereby limiting the depth of cut which they take, and thus improving edge finish on the workpiece.

When compared to a cobalt-based polyimide tool of similar configuration, this example multifunction tool performed comparably with respect to edge straightness and chip thickness proximate the edge.

Table 2 summarizes performance parameters of this comparative analysis between the Example 6 embodiment and the cobalt-based tool. In this example, tool performance was determined after allowing sufficient cuts for it to reach a steady state. The tool wear for example, is determined over 35 cuts after reaching the steady state. The comparative testing was done at a table speed of about 100 mm/min and tool speed of 9000 RPMs.

**Table 2: Comparative Performance Data**

| **Parameter** | **Cobalt-based Tool** | **Embodiment #6** |
|---|---|---|
| Tool Wear over 35 cuts, µm | 10-11 | 12-14 |
| Straightness µm | 2 | 2 |
| Kerf µm | 74 | 67 |
| Chips µm | 1 | 1 |

Methods of making abrasive tools as described herein can include one or more of the following steps:
(a) providing pre-selected proportions of particulate ingredients including superabrasive grains (e.g., fine diamond having average diameter of 1 to 2 microns), a polyimide, and a pre-alloyed bronze consisting essentially of about 40 to about 60 weight % of copper and about 40 to about 60 weight % of tin;
(b) mixing the particulate ingredients to form a substantially uniform composition, which can be formed using any suitable blending apparatus (e.g., double cone tumblers, twin-shell V-shaped tumblers, ribbon blenders, horizontal drum tumblers, and stationary shell/internal screw mixers);
(c) placing the substantially uniform composition into a mold of desired shape (e.g., 1A8 tool);
(d) compressing the mold to a pressure in the range of about 25-200 MPa for a duration effective to form a molded article;
(e) heating the molded article to a temperature less than 500°C (e.g., in the range of about 100°C to 450°C, or even more specifically, in the range of about 160°C to 400°C) for a duration effective to sinter the bronze and soften the polyimide, thereby integrating the abrasive grains and sintered bond into a composite of substantially continuous metal alloy phase, with a substantially continuous or substantially discontinuous polyimide phase (e.g., higher content such as 30 vol % or more of polyimide tends to provide a substantially continuous phase, while lower content such as less than 30 vol % tends to provide a substantially discontinuous phase; note, however, that either phase is acceptable and provides acceptable results);
(f) cooling the composite to form the abrasive tool; and
(g) lapping sides of the tool to provide desired degree of straightness and thickness (e.g., an axial thickness of the tool being substantially uniform at all radii from the radius of the arbor hole to the outer radius of the tool, with the final thickness being, e.g., about 65 microns). This lapping can be implemented as double-sided lapping, so as to further improve straightness.

The abrasive grits (e.g., diamonds) are generally present in both the bronze and polyimide phases, but predominantly in the bronze phase. The polyimide phase is more elastic than the bronze phase, and imparts a degree of elasticity to the abrasive tool, which is believed to control the depth of cut taken by the abrasive grits on the cutting edge, and possibly the sidewall of the tool (assuming a wheel configuration), so as to reduce the chip size taken due to the intended abrasion process and thus generate the surface finish required.

The abrasive tools described herein can be produced by a densification using cold-press or hot-press techniques. In a cold-press process, sometimes referred to as pressureless sintering, a blend of the composite components is introduced into a mold of desired shape and a high pressure is applied at room temperature to obtain a compact but friable molded article. The high pressure can be, for example, in the range of 25-200 MPa. Subsequently, pressure is relieved and the molded article is removed from the mold then heated to sintering temperature. The heating for sintering can be done, for instance, while the molded article is pressurized in an inert gas atmosphere to a lower pressure than the pre-sintering molding pressure (e.g., less than about 100 MPa, or even more specifically, less than about 50 MPa). Sintering can also take place under vacuum. During this low pressure sintering, the molded article (e.g., thin abrasive wheel of the 1A8 type) can be placed in a mold and/or sandwiched between flat plates, to help maintain its straightness during sintering. In a hot-press process, the blend of particulate bond composition is put in the mold, typically of graphite, and compressed to a high pressure as in the cold-press process. However, an inert gas is utilized and the high pressure is maintained while the temperature is raised, thereby achieving densification while the tool preform is under pressure.

Note that this method may be used to fabricate a single blade or multi-blade configuration. With respect to a multi-blade configuration made up of individually fabricated tools (gang configuration), there is an additional consideration of suitable tolerancing on each member tool of the gang. In more detail, while tolerances in a single blade embodiment may be acceptably higher, such high tolerances in a gang configuration may stack up to provide undesirable results (e.g., lack of desired precision). Thus, and in accordance with one embodiment of the present disclosure, tolerances of the individual tools included in the gang are such that any resulting stacking falls within an acceptable range. The ganged tools can be separated, for example, by spacers of a material such as alumina or steel. Alternatively, another embodiment is a multi-blade tool that is fabricated by forming a monolithic multi-blade structure from a thicker tool. The thicker tool can be made using the previously described manufacturing steps (a through f, and optionally g), with the initial tool thickness being sufficient to allow the desired number of individual tools to be formed therefrom (e.g., 3600 microns or thicker). Each of individual tools formed within that initial tool thickness can be, for example, under 125 microns (or less) and separated by the inner structure itself whose diameter is smaller than the thin outer tool. Such a monolithic structure effectively provides a built-in spacer between individual tools, thereby reducing tolerancing variables. A ganged assembly of individual tools having a thick inner section and thin outer section for cutting is described in the previously incorporated U.S. Patent No. 5,313,742. This principle (thick inner section and thin outer section) can be adopted into a monolithic structure as described herein. The forming of individual tools from the initial thicker tool can be accomplished, for instance, by electro-discharge machining (EDM), although other suitable machining techniques can be used (e.g., milling, wire sawing, etc). Finishing techniques such as lapping can be used to further refine parameters (thickness and straightness) of the individual tools.

The foregoing description of the embodiments of the disclosure has been presented for the purposes of illustration and description. It is not intended to be exhaustive or to limit the invention to the precise form disclosed. Many modifications and variations are possible in light of this disclosure. For instance, Vespel® SP1 polyimide is noted as acceptable for use in embodiments, but other comparable polyimides or polymers having qualities that suitably interact with the metal alloy and abrasive can be used as well. Likewise, the wheel types may vary (e.g., 1A1, 1A8, or any relatively thin abrasive wheel configuration). It is intended that the scope of the invention be limited not by this detailed description, but rather by the claims appended hereto.

## Claims

1. An abrasive tool for dicing and/or polishing of hard brittle materials, comprising:
a hybrid bond of a metal alloy and a resin associated with a softening temperature less than 500°C, wherein the metal alloy has a liquid phase or transient liquid phase at the softening temperature of the resin, has a fracture toughness between 1 and 5 MPa.m^{0.5} at room temperature, and does not include cobalt; and
a plurality of fine abrasive grits blended with the hybrid bond;
wherein the tool is a thin abrasive wheel having a substantially uniform thickness of 250 microns or less.

2. The abrasive tool of claim 1, wherein the softening temperature is a Heat Deflection Temperature as measured by ASTM standard D648, and is in the range of 160 to 400°C.

3. The abrasive tool of any one of claims 1-2, wherein the resin has a ductility in the range of about 3% to 25%.

4. The abrasive tool of any one of claims 1-3, wherein the metal alloy is a bronze.

5. The abrasive tool of any one of claims 1-4, wherein the resin is a polyimide.

6. The abrasive tool of any of claims 1-5, wherein the tool is a 1A8 type wheel or a 1A1 type wheel, having a thickness of about 100 microns or less, optionally having a thickness of about 70 microns or less, further optionally having a thickness of 65 microns or less.

7. The abrasive tool of any one of claims 1-6, wherein the tool includes about 1 to 50 volume percent (vol %) of polyimide, about 40 to 85 vol % of bronze, and about 5 to 40 vol % of fine abrasive grits.

8. The abrasive tool of claim 7, wherein the tool includes about 10 to 40 vol % of polyimide, about 45 to 75 vol % of bronze, and about 10 to 25 vol % of fine abrasive grits, and wherein the tool optionally includes about 11.25 vol % of polyimide, about 70 vol % of bronze, and about 18.75 vol % of fine abrasive grits, with each component having a tolerance of +/-20%.

9. The abrasive tool of any one of claims 1-8, wherein the bronze consists essentially of 60/40 to 40/60 by weight of copper and tin, and optionally consists essentially of 50/50 by weight of copper and tin.

10. The abrasive tool of any one of claims 1-9, wherein the polyimide consists essentially of particles having an average diameter of about 40 microns or less.

11. The abrasive tool of any one of claims 1-10, wherein the bronze consists essentially of particles having an average diameter of about 40 microns or less.

12. The abrasive tool of any one of claims 1-11, wherein the fine abrasive grits consist essentially of diamonds having an average diameter of about 40 microns or less, optionally having an average diameter of about 1 to 12 microns or of about 1 to 3 microns.

13. A method for making thin abrasive wheels for dicing and/or polishing of hard brittle materials, the method comprising the steps of:
providing pre-selected proportions of particulate ingredients including abrasive grains, a resin having a softening temperature, and a metal alloy having a liquid phase or transient liquid phase at the softening temperature of the resin and a fracture toughness between 1 and 5 MPa.m^{0.5} at room temperature and not including cobalt;
mixing the particulate ingredients to form a substantially uniform composition;
placing the substantially uniform composition into a mold of desired shape;
compressing the mold to a pressure in the range of about 25-200 MPa for a duration effective to form a molded article;
heating the molded article to a temperature less than 500°C for a duration effective to sinter the metal alloy and to soften the resin, thereby integrating the abrasive grains and sintered bond into a composite of substantially continuous metallic phase with a substantially continuous or substantially discontinuous resin phase;
cooling the composite to form the abrasive wheel; and
lapping sides of the abrasive wheel to provide a desired degree of straightness and a substantially uniform thickness of 250 microns or less.

14. The method of claim 13, wherein the resin is a polyimide, the metal alloy is a pre-alloyed bronze consisting essentially of between about 40 and about 60 weight % of copper and between about 40 and about 60 weight % of tin,

15. The method of claim 13 or 14, wherein lapping is performed as double-sided lapping so that opposing sides of the abrasive wheel are simultaneously lapped.

## Patentansprüche

1. Schleifwerkzeug zum Würfeln und/oder Polieren von hartspröden Materialien, umfassend:
eine Hybridbindung einer Metalllegierung und eines Harzes, das mit einer Erweichungstemperatur von weniger als 500 °C verbunden ist, wobei die Metalllegierung eine Flüssigphase oder transiente Flüssigphase bei der Erweichungstemperatur des Harzes aufweist, eine Bruchzähigkeit zwischen 1 und 5 MPa.m^{0,5} bei Raumtemperatur aufweist und kein Kobalt enthält; und
mehrere feine Schleifkörner, die mit der Hybridbindung vermischt sind;
wobei das Werkzeug eine dünne Schleifscheibe mit einer im Wesentlichen gleichförmigen Dicke von 250 Mikrometer oder weniger ist.

2. Schleifwerkzeug nach Anspruch 1, wobei die Erweichungstemperatur eine Wärmeformbeständigkeit wie gemäß ASTM-Standard D648 gemessen aufweist und im Bereich von 160 bis 400 °C liegt.

3. Schleifwerkzeug nach einem der Ansprüche 1 bis 2, wobei das Harz eine Duktilität im Bereich von etwa 3 % bis 25 % aufweist.

4. Schleifwerkzeug nach einem der Ansprüche 1 bis 3, wobei die Metalllegierung ein Erz ist.

5. Schleifwerkzeug nach einem der Ansprüche 1 bis 4, wobei das Harz ein Polyimid ist.

6. Schleifwerkzeug nach einem der Ansprüche 1 bis 5, wobei das Werkzeug eine 1A8-Scheibe oder eine 1A1-Scheibe mit einer Dicke von etwa 100 Mikrometern oder weniger ist und wahlweise eine Dicke von etwa 70 Mikrometern oder weniger aufweist und ferner wahlweise eine Dicke von 65 Mikrometern oder weniger aufweist.

7. Schleifwerkzeug nach einem der Ansprüche 1 bis 6, wobei das Werkzeug etwa 1 bis 50 Volumenprozent (Vol.-%) Polyimid enthält, etwa 40 bis 85 Vol.-% Erz und etwa 5 bis 40 Vol.-% feine Schleifkörner enthält.

8. Schleifwerkzeug nach Anspruch 7, wobei das Werkzeug etwa 10 bis 40 Vol.-% Polyimid, etwa 45 bis 75 Vol.-% Erz und etwa 10 bis 25 Vol.-% feine Schleifkörner enthält und wobei das Werkzeug wahlweise etwa 11,25 Vol.-% Polyimid, etwa 70 Vol.-% Erz und etwa 18,75 Vol.-% feine Schleifkörner enthält, wobei jeder der Bestandteile eine Toleranz von +/- 20 % aufweist.

9. Schleifwerkzeug nach einem der Ansprüche 1 bis 8, wobei das Erz im Wesentlichen aus 60/40 bis 40/60 Gew.-% Kupfer und Zinn besteht und wahlweise im Wesentlichen aus 50/50 Gew.-% Kupfer und Zinn besteht.

10. Schleifwerkzeug nach einem der Ansprüche 1 bis 9, wobei das Polyimid im Wesentlichen aus Teilchen besteht, die einen Durchschnittsdurchmesser von etwa 40 Mikrometer oder weniger aufweisen.

11. Schleifwerkzeug nach einem der Ansprüche 1 bis 10, wobei das Erz im Wesentlichen aus Teilchen besteht, die einen Durchschnittsdurchmesser von etwa 40 Mikrometern oder weniger aufweisen.

12. Schleifwerkzeug nach einem der Ansprüche 1 bis 11, wobei die feinen Schleifkörner im Wesentlichen aus Diamanten mit einem Durchschnittsdurchmesser von etwa 40 Mikrometern oder weniger bestehen, wahlweise mit einem Durchschnittsdurchmesser von etwa 1 bis 12 Mikrometern oder etwa 1 bis 3 Mikrometern.

13. Verfahren zum Herstellen von dünnen Schleifscheiben zum Würfeln und/oder Polieren von hartspröden Materialien, wobei das Verfahren die folgenden Schritte umfasst:
Bereitstellen von zuvor ausgewählten Anteilen von teilchenförmigen Bestandteilen, einschließlich Schleifkörnern, einem Harz mit einer Erweichungstemperatur und einer Metalllegierung, die eine Flüssigphase oder transiente Flüssigphase bei der Erweichungstemperatur des Harzes und eine Bruchzähigkeit zwischen 1 und 5 MPa.m^{0,5} bei Raumtemperatur aufweist und kein Kobalt enthält,
Mischen der teilchenförmigen Bestandteile zum Bilden einer im Wesentlichen gleichförmigen Zusammensetzung;
Anordnen der im Wesentlichen gleichförmigen Zusammensetzung in einer Gussform einer gewünschten Form;
Komprimieren der Gussform bei einem Druck im Bereich von etwa 25 bis 200 MPa für eine Zeitdauer, die ausreicht, um einen Formartikel zu formen;
Erwärmen des Formartikels auf eine Temperatur, die geringer als 500 °C ist, für eine Zeitdauer, die zum Sintern der Metalllegierung und zum Erweichen des Harzes wirksam ist, und dadurch Integrieren der Schleifkörner und der gesinterten Bindung in einen Verbundwerkstoff einer im Wesentlichen kontinuierlichen metallischen Phase mit einer im Wesentlichen kontinuierlichen oder im Wesentlichen diskontinuierlichen Harzphase;
Kühlen des Verbundwerkstoffs zum Formen der Schleifscheibe; und
Läppen der Seiten der Schleifscheibe zum Bereitstellen eines gewünschten Geradheitsgrads und einer im Wesentlichen gleichförmigen Dicke von 250 Mikrometern oder weniger.

14. Verfahren nach Anspruch 13, wobei das Harz ein Polyimid ist, die Metalllegierung ein vorlegiertes Erz, bestehend aus im Wesentlichen zwischen etwa 40 und etwa 60 Gew.-% Kupfer und zwischen etwa 40 und etwa 60 Gew.-% Zinn.

15. Verfahren nach Anspruch 13 oder 14, wobei das Läppen als doppelseitiges Läppen durchgeführt wird, sodass gegenüberliegende Seiten der Schleifscheibe gleichzeitig geläppt werden.

## Revendications

1. Outil abrasif pour la découpe et/ou le polissage de matériaux fragiles durs, comprenant :
un liant hybride constitué d'un alliage métallique et d'une résine associée avec une température de ramollissement inférieure à 500°C, l'alliage métallique présentant une phase liquide ou une phase liquide transitoire à la température de ramollissement de la résine, possédant une ténacité à la rupture comprise entre 1 et 5 MPa.m^{0,5} à température ambiante, et ne comportant pas de cobalt ; et
une pluralité de grains abrasifs fins mélangés avec le liant hybride ;
l'outil étant une meule abrasive fine ayant une épaisseur sensiblement uniforme de 250 µm ou moins.

2. Outil abrasif selon la revendication 1, dans lequel la température de ramollissement est une température de fléchissement sous charge telle que mesurée par la norme ASTM D648, et se situe dans la gamme de 160 à 400°C.

3. Outil abrasif selon l'une quelconque des revendications 1 et 2, dans lequel la résine a une ductilité dans la gamme d'environ 3 % à 25 %.

4. Outil abrasif selon l'une quelconque des revendications 1 à 3, dans lequel l'alliage métallique est un bronze.

5. Outil abrasif selon l'une quelconque des revendications 1 à 4, dans lequel la résine est un polyimide.

6. Outil abrasif selon l'une quelconque des revendications 1 à 5, l'outil étant une meule de type 1A8 ou une meule de type 1A1, ayant une épaisseur d'environ 100 µm ou moins, éventuellement ayant une épaisseur d'environ 70 µm ou moins, éventuellement encore ayant une épaisseur de 65 µm ou moins.

7. Outil abrasif selon l'une quelconque des revendications 1 à 6, l'outil comportant environ 1 à 50 pour cent en volume (% en volume) de polyimide, environ 40 à 85 % en volume de bronze, et environ 5 à 40 % en volume de grains abrasifs fins.

8. Outil abrasif selon la revendication 7, l'outil comportant environ 10 à 40 % en volume de polyimide, environ 45 à 75 % en volume de bronze, et environ 10 à 25 % en volume de grains abrasifs fins, et l'outil comportant éventuellement environ 11,25 % en volume de polyimide, environ 70 % en volume de bronze, et environ 18,75 % en volume de grains abrasifs fins, chaque composant ayant une tolérance de ± 20 %.

9. Outil abrasif selon l'une quelconque des revendications 1 à 8, dans lequel le bronze consiste essentiellement en 60/40 à 40/60 en poids de cuivre et d'étain, et éventuellement consiste essentiellement en 50/50 en poids de cuivre et d'étain.

10. Outil abrasif selon l'une quelconque des revendications 1 à 9, dans lequel le polyimide consiste essentiellement en des particules ayant un diamètre moyen d'environ 40 µm ou moins.

11. Outil abrasif selon l'une quelconque des revendications 1 à 10, dans lequel le bronze consiste essentiellement en des particules ayant un diamètre moyen d'environ 40 µm ou moins.

12. Outil abrasif selon l'une quelconque des revendications 1 à 11, dans lequel les grains abrasifs fins consistent essentiellement en des diamants ayant un diamètre moyen d'environ 40 µm ou moins, éventuellement ayant un diamètre moyen d'environ 1 à 12 µm ou d'environ 1 à 3 µm.

13. Procédé de fabrication de meules abrasives fines pour la découpe et/ou le polissage de matériaux fragiles durs, le procédé comprenant les étapes consistant à :
se procurer des proportions présélectionnées d'ingrédients particulaires incluant des grains abrasifs, une résine ayant une température de ramollissement, et un alliage métallique présentant une phase liquide ou une phase liquide transitoire à la température de ramollissement de la résine et une ténacité à la rupture comprise entre 1 et 5 MPa.m^{0,5} à température ambiante et ne comportant pas de cobalt ;
mélanger les ingrédients particulaires pour former une composition sensiblement uniforme ;
placer la composition sensiblement uniforme dans un moule de forme souhaitée ;
comprimer le moule jusqu'à une pression dans la gamme d'environ 25-200 MPa pendant une durée efficace pour former un article moulé ;
chauffer l'article moulé jusqu'à une température inférieure à 500°C pendant une durée efficace pour fritter l'alliage métallique et pour ramollir la résine, et intégrer ainsi les grains abrasifs et le liant fritté dans un composite de phase métallique sensiblement continue avec une phase de résine sensiblement continue ou sensiblement discontinue ;
refroidir le composite pour former la meule abrasive ; et
roder les côtés de la meule abrasive pour obtenir un degré souhaité de rectitude et une épaisseur sensiblement uniforme de 250 µm ou moins.

14. Procédé selon la revendication 13, dans lequel la résine est un polyimide, l'alliage métallique est un bronze pré-allié essentiellement composé d'environ 40 à environ 60 % en poids de cuivre et d'environ 40 à environ 60 % en poids d'étain.

15. Procédé selon la revendication 13 ou 14, dans lequel le rodage est effectué comme un rodage double face de telle sorte que les côtés opposés de la meule abrasive sont rodés simultanément.
